# NEUE EUROPÄISCHE PATENTSCHRIFT

(11) **EP 0 485 739 B2**
(45) Veröffentlichungstag und Bekanntmachung des Hinweises auf die Entscheidung über den Einspruch: **13.09.2000**
(45) Hinweis auf die Patenterteilung: 03.01.1996
(21) Anmeldenummer: 91117256.7
(22) Anmeldetag: 10.10.1991
(51) Int. Cl.: F16K 7/12, F16K 31/02

(54) **Mikroventil in Mehrschichtenaufbau**
Microvalve having a multilayer structure
Microvalve dans une structure à plusieurs couches

(30) Priorität: 10.11.1990 DE 4035852
(43) Veröffentlichungstag der Anmeldung: 20.05.1992
(73) Patentinhaber: ROBERT BOSCH GMBH, 70442 Stuttgart (DE)
(72) Erfinder: Marek, Jiri, Dr., Dipl.-Ing., W-7410 Reutlingen 22 (DE); Mettner, Micheal, Dr., Dipl.-Ing., W-7140 Ludwigsburg (DE); Willmann, Martin, Dr., Dipl.-Ing., W-7410 Reutlingen (DE); Muchow, Jörg, Dipl.-Ing., W-7410 Reutlingen (DE); Schuelke, Armin, Dipl.-Ing., W-7140 Ludwigsburg (DE); Grauer, Thomas, Dr. Dipl.-Phys., W-7000 Stuttgart 1 (DE); Trah, Hans-Peter, Dr., Dipl.-Min., W-7410 Reutlingen (DE); Doering, Christian, Dipl.-Ing., W-7000 Stuttgart 80 (DE)

(56) Entgegenhaltungen:
- WO-A-90/12209
- DE-A- 3 621 331
- DE-A- 3 621 332
- GB-A- 2 155 152
- US-A- 4 826 131

## Beschreibung

### Stand der Technik

Die Erfindung geht aus von einem Mikroventil nach der Gattung des Hauptanspruchs.

Aus der GB 21 55 152A ist bereits ein Mikroventil bekannt, das im wesentlichen in drei Schichten aufgebaut ist. In einer Silizium-Trägerschicht sind ein Einlaß und ein Auslaß sowie ein Ventilsitz ausgebildet. Auf die Silizium-Trägerschicht ist eine Zwischenschicht und auf diese Zwischenschicht eine Deckschicht aufgebracht, wobei diese Schichten einen die Druckmittelverbindung zwischen den beiden Anschlüssen herstellenden Raum formen. Die Deckschicht ist zugleich als Membran ausgebildet, in die auch ein dem Ventilsitz zugeordnetes Schließglied integriert ist. Beim Betrieb dieses Mikroventils muß eine auf der Membran angeordnete elektrostatische Betätigungseinrichtung nicht nur die Kräfte der federnden Membran überwinden, sondern auch den im Eingang anstehenden Druck des Fluids, da die den Ventilsitz schließende Membran diesem Druck gegenüber unausgeglichen ist.

Aus der DE 36 21 331 A1 ist bereits ein Mikroventil gemäß Oberbegriff des Anspruchs 1 bekannt, welches aus einem Siliziumträger mit einer darauf aufgebrachten Epitaxieschicht gebildet wird. Aus der Epitaxieschicht ist ein Schließglied und verbiegbare Stege herausgebildet, wobei das Schließglied an den verbiegbaren Stegen aufgehängt ist. Unterhalb des Schließgliedes ist der Siliziumträger durchgeätzt, so daß eine Ventilöffnung gebildet wird. Weiterhin ist eine Glasplatte mit einer Ventilöffnung und einer Elektrode vorgesehen. Durch Anlegen von elektrischen Spannungen an die Elektrode kann das Schließglied gegen die Ventilöffnung in der Glasplatte bewegt werden.

### Vorteile der Erfindung

Das erfindungsgemäße Mikroventil mit den kennzeichnenden Merkmalen des Hauptanspruchs hat den Vorteil, daß es einen zweiseitigen elektrostatischen Antrieb aufweist, der ein aktives Öffnen und ein aktives Schließen des Ventils ermöglicht. Besonders vorteilhaft sind in diesem Zusammenhang die symmetrische Ausgestaltung der Ventilplatte. Der symmetrische Sandwich-Aufbau führt zu einer weitgehenden Spannungsfreiheit der Struktur während der Herstellung. Durch die Anordnung von Einlaß und Auslaß in jeweils einer Abdeckungen sind Einlaß- und Auslaßseite voneinander getrennt, wodurch der Aufbau des Systems vereinfacht wird. Es ist ferner vorteilhaft, das mindestens eine Schließelement aus der elektrostatisch betätigbaren Ventilplatte zu strukturieren und diese Ventilplatte gleichzeitig als eine Elektrodenseite des elektrostatischen Antriebes zu verwenden.

Durch die in den Unteransprüchen aufgeführten Maßnahmen sind vorteilhafte Weiterbildungen des im Hauptanspruch angegebenen Mikroventils möglich. Für die den Einlaß und den Auslaß beinhaltenden Abdeckungen können vorteilhaft Glasschichten oder mehrschichtige Abdeckungen, deren dem strukturierten Silizium-Träger zugewandten Schichten Glasschichten sind, verwendet werden. In diesem Fall ist es günstig, als Elektroden und Elektrodenanschlüsse auf den Abdeckungen strukturierte Metallisierungen zu verwenden. Dies können beispielsweise aufgedampfte oder gesputterte Aluminiumschichten sein. Es ist außerdem günstig, Elektrodenanschlüsse in Form von Metallisierungen durch Ätzkanäle im strukturierten Silizium-Träger an die Außenseite des Mikroventils zu führen. Eine weitere vorteilhafte Ausgestaltung besteht darin, auch als Abdeckungen Silizium-Träger zu verwenden. Dabei können die Einlaß- und Auslaßlöcher einfach durch einen Ätzprozeß erzeugt werden. Die elektrische Isolierung des strukturierten Silizium-Trägers gegen die Abdeckungen kann bei einer solchen Anordnung einfach durch Silizium-Oxid-Schichten oder auch Glasschichten erfolgen. Ein besonderer Vorteil dieser Anordnung besteht darin, daß die Elektroden sowie die Elektrodenanschlüsse in das Silizium-Material der Abdeckungen eindiffundiert werden können. Damit erübrigt sich die Durchführung der Metall-elektrodenanschlüsse an die Außenseite des Ventils durch Ätzkanäle im strukturierten Silizium-Wafer und damit auch ein Abdichtungsprozeß des Ventils. Ein weiterer Vorteil von eindiffundierten Elektroden ist, daß die Strömungseigenschaften des Fluids nicht durch eine Materialstufe im Innenraum des Ventils gestört werden. Eine besonders vorteilhafte Ausgestaltung des Schließgliedes als Strukturelement der Ventilplatte besteht in einer Dichtlippe, die je nach Funktion des Ventils gegen den Ventilsitz rund um den Einlaß bzw. Auslaß des Ventils drückbar ist. Im Falle, daß nur eine Dichtlippe ausgebildet ist, die gegen den Ventilsitz des Auslasses drückbar ist, erweist es sich als günstig, auf der der Dichtlippe gegenüberliegenden Oberfläche der Ventilplatte mindestens einen Abstandshalter anzuordnen, der ein Schließen des Ventils auf der Einlaßseite verhindert, wenn das Ventil auf der Auslaßseite geöffnet ist. Es ist ferner wichtig, die Dichtlippen und/oder Abstandshalter so auf der Ventilplatte anzuordnen, daß sie bei Berührung der Abdeckungen nicht in leitendem Kontakt mit den Elektroden oder Elektrodenanschlüssen stehen, um ein Kurzschließen des elektrostatischen Antriebs zu vermeiden. Durch nutartige Vertiefungen in den den Abdeckungen zugewandten Oberflächen der Ventilplatte lassen sich die Durchflußmenge und das Strömungsverhalten des Fluids weitgehend unabhängig von der Dimensionierung des elektrostatischen Antriebs, vorteilhaft beeinflussen. Das erfindungsgemäße Mikroventil läßt sich sowohl als Schaltventil als auch als stetiges Steuerventil vorteilhaft einsetzen.

### Zeichnung

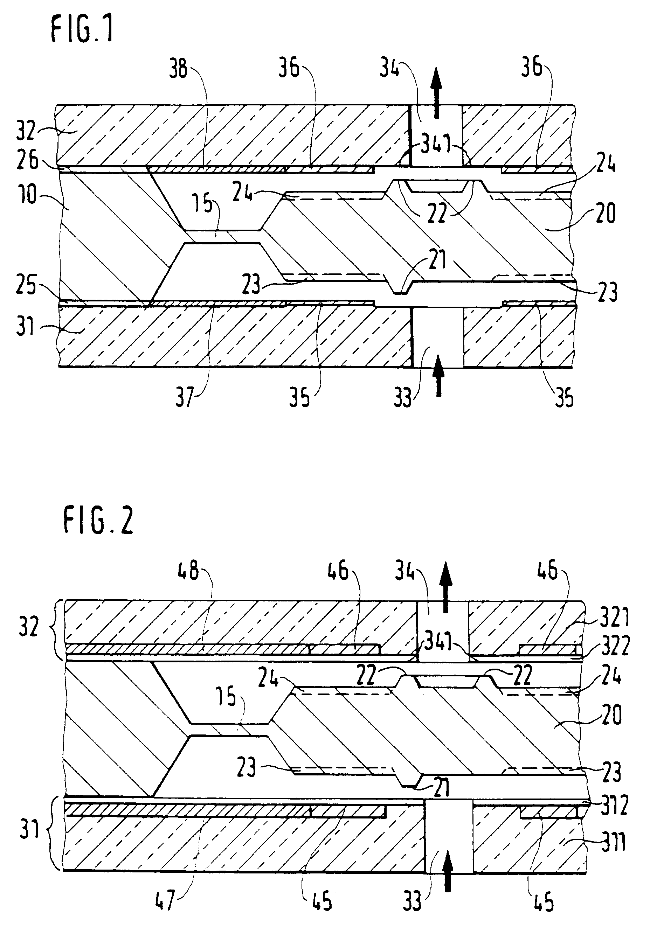

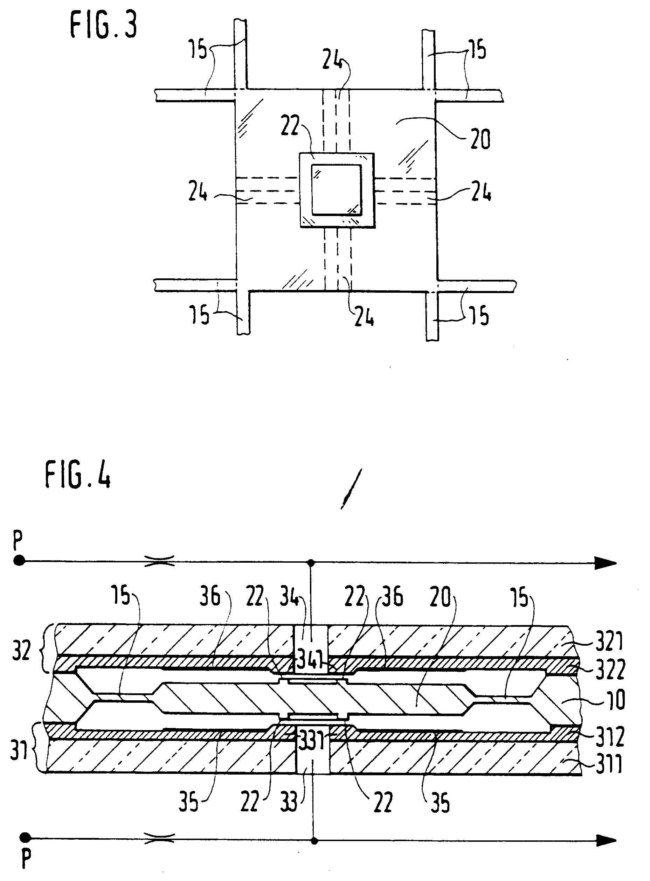

Ausführungsbeispiele der Erfindung sind in der Zeichnung dargestellt und in der nachfolgenden Beschreibung näher erläutert. Es zeigen Figur 1 den Schnitt durch ein Schaltventil, Figur 2 den Schnitt durch ein weiteres Schaltventil, Figur 3 die Aufsicht auf die Ventilplatte eines in Figur 1 oder Figur 2 dargestellten Ventils und Figur 4 den Schnitt durch ein Steuerventil.

### Beschreibung der Erfindung

Die Figur 1 zeigt einen Längsschnitt durch ein einzelnes Mikroventil in Mehrschichtenstruktur in stark vergrößerter und vereinfachter Darstellung. Für die Herstellung dieser Mehrschichtenstruktur werden Fertigungstechnologien verwendet, wie sie aus der Mikromechanik und der Halbleitertechnologie bekannt sind, insbesondere isotropes und anisotropes Ätzen von Silizium sowie die Strukturierung von Glas. Diese Technologien zur Herstellung von bestimmten dreidimensionalen Formen in einer Mehrschichtenstruktur und deren Möglichkeit, durch Strukturdetails bestimmte mechanische Elemente herauszubilden, werden hierbei als bekannt vorausgesetzt.

Das Mikroventil in Figur 1 weist einen strukturierten Silizium-Träger 10 auf, der die mittlere Schicht des Aufbaus bildet, sowie zwei Abdeckungen 31 und 32, die beidseitig auf den Silizium-Träger 10 aufgebracht sind. Als Material für die beiden Abdeckungen 31 und 32 in dem in Figur 1 dargestellten Ausführungsbeispiel eignet sich besonders Glas, da die Verbindung zwischen dem strukturierten Silizium-Träger 10 und den Abdeckungen 31 und 32 dann einfach durch anodisches Bonden hergestellt sein kann. Die eine Abdeckung 31 weist einen Durchbruch, der als Einlaß 33 dient, auf. Diesem Einlaß 33 gegenüber in der anderen Abdeckung 32 ist ein Durchbruch 34 angeordnet, der als Auslaß dient. Aus dem zwischen den Abdeckungen 31 und 32 angeordneten Silizium-Wafer 10 ist im Bereich des Einlasses 33 und des Auslasses 34 eine bewegliche Ventilplatte 20 herausstrukturiert. Sie ist bezüglich der den Abdeckungen 31 und 32 zugewandten Oberflächen im wesentlichen symmetrisch und an einem oder auch mehreren Stegen 15 mit dem Silizium-Träger 10 verbunden. Sie kann unsymmetrisch einseitig oder auch symmetrisch zweiseitig oder sternförmig mit dem Silizium-Träger 10 verbunden sein. Beim Aufbau dieses Mikroventils ist jedoch darauf zu achten, daß zwischen den Aufhängungsstegen 15 eine ausreichend große Öffnung vorhanden ist, so daß eine Mindestmenge des Fluids vom Einlaß zum Auslaß gelangen kann. Auf der Ventilplatte 20 ist rund um den Bereich des Auslasses 34 eine Dichtlippe 22 ausgebildet, die gegen den Ventilsitz 341 rund um den Auslaß 34 drückbar ist. Dies erfolgt durch elektrostatische Betätigung der Ventilplatte 20. Auf beiden Abdeckungen 31 und 32 sind im Bereich der Ventilplatte 20 Elektroden 35 und 36 aufgebracht mit Elektrodenzuleitungen 37 und 38. Eine einfache Möglichkeit der Realisierung dieser Elektroden 35, 36 und Elektrodenzuleitungen 37, 38 besteht bei diesem Ausführungsbeispiel in einer strukturierten Metallisierung, beispielsweise durch Aufdampfen oder Sputtern von Aluminium. Durch Anlegen einer Spannung zwischen den Elektroden 35 oder 36 und der Ventilplatte 20 läßt sich die Ventilplatte 20 sowohl in Richtung der Abdeckung 32, also in Richtung des Auslasses, als auch in Richtung der Abdeckung 31, also in Richtung des Einlasses, bewegen. Das heißt, daß das erfindungsgemäße Ventil sowohl aktiv geschlossen als auch aktiv geöffnet werden kann. Um zu verhindern, daß beim Öffnen des Ventils auf der Auslaßseite der Einlaß 33 verschlossen wird, ist aus der Ventilplatte 20 ein Abstandshalter 21 im Bereich des Einlasses 33 herausstrukturiert. Um ein Kurzschließen der als Gegenelektrode dienenden Ventilplatte 20 und der Elektroden 35 und 36 bzw. der Elektrodenanschlüsse 37 und 38 zu verhindern, sind Dichtlippe 22 und Abstandshalter 21 so angeordnet, daß sie bei Berührung der Abdeckungen 31 und 32 nicht in leitenden Kontakt mit den elektroden 35 und 36 bzw. den Elektrodenanschlüssen 37 und 38 kommen. Die Elektrodenanschlüsse 37 und 38 sind durch Ätzkanäle 25, 26 im Silizium-Träger 10 an die Außenseite des Mikroventils geführt. Diese Ätzkanäle 25, 26 müssen geeignet abgedichtet werden, um die Funktionsfähigkeit des Mikroventils zu gewährleisten. Zur Verbesserung der Fluidzu- bzw. -abfuhr können in der Ventilplatte 20 nutartige Ätzgräben 23, 24 eingebracht sein.

In Figur 3 ist die Aufsicht auf eine mögliche Ausgestaltung einer aus dem Silizium-Träger 10 herausstrukturierten Ventilplatte 20 dargestellt. Die Ventilplatte 20 ist rechteckig bzw. quadratisch ausgebildet und weist in ihrer Mitte eine gegenüber der Oberfläche der Ventilplatte 20 erhabene, rahmenförmige Dichtlippe 22 auf. Ausgehend von der Dichtlippe 22 sind die nutartigen Ätzgräben 24 sternförmig bis an den Rand der Ventilplatte 20 ausgebildet. Die Ventilplatte 20 ist an acht dünnen Stegen 15, die von den Ecken der Ventilplatte 20 ausgehen, mit dem Silizium-Träger 10 verbunden. Die Erfindung beschränkt sich jedoch nicht auf diese spezielle Anzahl, Anordnung und Ausgestaltung der Stege 15 und der Ätzgräben 24; sie umfaßt vielmehr alle für die jeweilige Funktion des Mikroventils vorteilhaften Varianten.

In Figur 2 ist der Längsschnitt durch ein Mikroventil dargestellt, das im wesentlichen genauso aufgebaut ist, wie das in Figur 1 dargestellte Mikroventil mit einem strukturierten Silizium-Träger 10, der eine an dünnen Stegen 15 aufgehängte Ventilplatte 20 mit einer Dichtlippe 22 in Richtung des Auslasses 34 und einem Abstandshalter 21 in Richtung des Einlasses 33 aufweist. Es sind ferner auch nutartige Ätzgräben 23 und 24 auf den Oberflächen der Ventilplatte 20 vorgesehen. Jedoch werden bei dem in Figur 2 dargestellten Mikroventil die Abdeckungen 31 und 32 von Silizium-Trägern 311 und 321 gebildet, auf deren dem Silizium-Träger 10 zugewandten Oberflächen Silizium-Oxid-Schichten 312, 322 abgeschieden sind, die zur elektrischen Isolation und zum mechanischen Schutz zwischen den Abdeckungen 31 und 32 und dem strukturierten Silizium-Wafer 10 bzw. der Ventilplatte 20 dienen. Die Verwendung von Silizium-Trägern als Abdeckungen 31 und 32 haben den Vorteil, daß die als Einlaß- bzw. Auslaß dienenden Löcher einfach geätzt werden können und keine Prozessierung von Na-haltigem Glas notwendig ist. Ferner können die Elektroden 45 und 46 sowie die Elektrodenanschlüsse 47 und 48 in die Silizium-Träger 311 und 321 eindiffundiert werden. Dadurch entfällt das Aufdampfen bzw. Aufbringen von Metallisierungen, was die Strömungseigenschaften des Fluids innerhalb des Mikroventils beeinflußt. Da sich bei diesem Verfahren auch eine Durchführung der Elektrodenanschlüsse durch Ätzkanäle im strukturierten Silizium-Träger 10 und ein anschließendes Abdichten dieser Ätzkanäle erübrigt, läßt sich diese Ausführungsform des Mikroventils sehr einfach aufbauen. Diese Ausführungsform des Mikroventils ist auch deshalb sehr vorteilhaft, da die das Ventil durchströmenden Flüssigkeiten nur mit chemisch stabilen Stoffen, wie Silizium-Oxid und Silizium, in Berührung kommen.

Die in den Figuren 1 und 3 dargestellten Mikroventile lassen sich vorteilhaft als Schaltventile mit zwei oder drei Schaltstellungen verwenden. Denkbar ist aber auch eine Anwendung als stetiges Steuerventil, wie es beispielhaft in Figur 4 dargestellt ist. Die mittlere Schicht des Ventils bildet wieder ein strukturierter Silizium-Träger 10 mit einer Ventilplatte 20, die an dünnen Stegen 15 mit dem Träger 10 verbunden ist und im Bereich der einander gegenüber angeordneten Einströmöffnungen 33 und 34 in den Abdeckungen 31 und 32 jeweils eine Dichtlippe 22 aufweist. An beiden Einströmöffungen 33 und 34 des Ventiles liegen Fluidströme an, so daß das Ventil eine Verbindung zwischen den Fluidströmen darstellt. Durch Veränderung der Stellung der Ventilplatte 20 wird der wirksame Durchströmquerschnitt zwischen Ventilplatte und jeweiliger Einströmöffnung geändert. Die Durchströmmenge durch das Ventil von einer Seite zur anderen bzw. die Richtung des Durchflusses wird durch die Stellung der Ventilplatte 20 bestimmt. Diese ist stetig änderbar, so daß das Ventil günstig als Steuerstufe Verwendung finden kann. Die Abdeckungen 31, 32 bestehen in diesem Ausführungsbeispiel jeweils aus einer Glasschicht 312, 322, die dem strukturierten Silizium-Träger 10 zugewandt ist, und einem darauf aufgebrachten Silizium-Träger 311, 321. Bei diesem zweischichtigen Aufbau der Abdeckungen 31 und 32 lassen sich entweder Elektroden und Elektrodenanschlüsse auf die der Ventilplatte 20 zugewandten Oberflächen der Abdeckungen 31 und 32 aufbringen als auch Elektroden und Elektrodenanschlüsse in die der Ventilplatte 20 zugewandten Oberflächen der Silizium-Träger 311, 321 eindiffundieren.

## Patentansprüche

1. Mikroventil, das in mehreren Schichten aufgebaut ist,
- wobei mindestens eine Schicht durch einen strukturierten Silizium-Träger gebildet ist,
- wobei der strukturierte Silizium-Träger (10) zwischen zwei aus jeweils einer oder mehreren Schichten (311, 312, 321, 322) bestehenden Abdeckungen (31, 32) angeordnet ist,
- wobei ein Einlaß (33) durch einen Durchbruch in einer der beiden Abdeckungen (31) gebildet ist,
- wobei ein Auslaß (34) durch einen Durchbruch in der anderen Abdeckung (32) gebildet ist,
- wobei ein Schließglied über mindestens einen verbiegbaren Steg (15) mit dem Silizium-Träger (10) verbunden ist,
dadurch gekennzeichnet,
- daß das Mikroventil als symmetrischer Sandwich-Aufbau ausgeführt ist,
- daß aus dem Silizium-Träger (10) im Bereich des Einlasses (33) und des Auslasses (34) eine bezüglich der den beiden Abdeckungen (31, 32) zugewandten Oberflächen in etwa symmetrische Ventilplatte (20) strukturiert ist,
- daß die Ventilplatte (20) im Bereich des Einlasses (33) und/oder des Auslasses (34) als das Schließglied (22) ausgebildet ist,
- daß der Ventilplatte (20) gegenüber auf den Abdeckungen (31, 32) Elektroden (35, 36, 45, 46) angeordnet sind,
- daß die Ventilplatte (20) als Gegenelektrode für die Elektroden (35, 36, 45, 46) dient
- und daß durch Anlegen von elektrischen Spannungen an die Elektroden (35, 36, 45, 46) bzw. die Ventilplatte (20) eine Bewegung der Ventilplatte (20) zum Einlaß (33) oder Auslaß (34) hin bewirkbar ist.

2. Mikroventil nach Anspruch 1, dadurch gekennzeichnet, daß der Einlaß (33) und der Auslaß (34) einander gegenüber angeordnet sind.

3. Mikroventil nach Anspruch 1 oder 2, dadurch gekennzeichnet, daß die dem Silizium-Träger (10) zugewandten Schichten (312, 322) der Abdeckungen (31, 32) Glasschichten sind.

4. Mikroventil nach einem der vorhergehenden Ansprüche, dadurch gekennzeichnet, daß auf den dem Silizium-Träger (10) zugewandten Oberflächen der Abdeckungen (31, 32) die Elektroden (35, 36) und Elektrodenanschlüsse (37, 38) in Form von strukturierten Metallisierungen aufgebracht sind.

5. Mikroventil nach Anspruch 4, dadurch gekennzeichnet, daß die Elektrodenanschlüsse (37, 38) durch Ätzkanäle (25) im Silizium-Träger (10) an die Außenseite des Mikroventils geführt sind.

6. Mikroventil nach einem der Ansprüche 1 bis 3, dadurch gekennzeichnet, daß die Abdeckungen (31, 32) jeweils einen Silizium-Träger (311, 321) mit mindestens einer darauf aufgebrachten Isolierschicht (312, 322) aufweisen, die den Silizium-Träger (10) gegen die Silizium-Träger (311, 321) der Abdeckungen (31, 32) elektrisch isolieren.

7. Mikroventil nach Anspruch 6, dadurch gekennzeichnet, daß die Isolierschichten (312, 322) Silizium-Oxid-Schichten sind.

8. Mikroventil nach Anspruch 6 oder 7, dadurch gekennzeichnet, daß die Elektroden (45, 46) und Elektrodenanschlüsse (47, 48) in die dem Silizium-Träger (10) zugewandten Oberflächen der Silizium-Träger (311, 321) der Abdeckungen diffundiert sind.

9. Mikroventil nach einem der vorhergehenden Ansprüche, dadurch gekennzeichnet, daß die Ventilplatte (20) einseitig, zweiseitig, dreiseitig oder vierseitig mit dem Silizium-Träger (10) verbunden ist.

10. Mikroventil nach einem der vorhergehenden Ansprüche, dadurch gekennzeichnet, daß die Ventilplatte (20) im Bereich des Einlasses (33) und/oder des Auslasses (34) eine Dichtlippe (22) als Schließglied aufweist, die gegen den mindestens einen Ventilsitz (331, 341) drückbar ist.

11. Mikroventil nach einem der vorhergehenden Ansprüche, dadurch gekennzeichnet, daß die Ventilplatte (20) eine gegen den Ventilsitz (341) des Auslasses (34) drückbare Dichtlippe (22) aufweist und daß die der Dichtlippe (22) gegenüberliegenden Oberfläche der Ventilplatte (20) mindestens einen Abstandshalter (21) zur Abdeckung (31) aufweist.

12. Mikroventil nach einem der vorhergehenden Ansprüche, dadurch gekennzeichnet, daß die Ventilplatte (20) in ihrem den Abdeckungen (31, 32) zugewandten Oberflächen nutartige Vertiefungen (23, 24) aufweist.

13. Mikroventil nach einem der vorhergehenden Ansprüche, dadurch gekennzeichnet, daß es als Schaltventil verwendet wird.

14. Mikroventil nach einem der Ansprüche 1 bis 12, dadurch gekennzeichnet, daß es als stetiges Steuerventil verwendet wird.

## Claims

1. Microvalve having a multilayer structure,
- at least one layer being formed by a textured silicon carrier,
- the textured silicon carrier (10) being arranged between two coverings (31, 32) which each comprise one or more layers (311, 312, 321, 322) ,
- an inlet (33) being formed by a perforation in one of the two coverings (31),
- an outlet (34) being formed by a perforation in the other covering (32),
- a closing element being connected to the silicon carrier (10) by means of at least one bendable web (15),
characterized
- in that the microvalve is designed as a symmetrical sandwich structure,
- in that a valve plate (20) which is approximately symmetrical with regard to the surfaces facing the two coverings (31, 32) is textured from the silicon carrier (10) in the region of the inlet (33) and of the outlet (34) ,
- in that the valve plate (20) is constructed as the closing element (22) in the region of the inlet (33) and/or of the outlet (34),
- in that electrodes (35, 36, 45, 46) are arranged opposite the valve plate (20) on the coverings (31, 32),
- in that the valve plate (20) serves as a counter-electrode for the electrodes (35, 36, 45, 46),
- and in that a movement of the valve plate (20) towards the inlet (33) or outlet (34) can be effected by applying electrical voltages to the electrodes (35, 36, 45, 46) and the valve plate (20).

2. Microvalve according to Claim 1, characterized in that the inlet (33) and the outlet (34) are arranged opposite one another.

3. Microvalve according to Claim 1 or 2, characterized in that the layers (312, 322), facing the silicon carrier (10), of the coverings (31, 32) are glass layers.

4. Microvalve according to one of the preceding claims, characterized in that the electrodes (35, 36) and electrode connections (37, 38) are applied in the form of textured metallization layers to the surfaces, facing the silicon carrier (10) of the coverings (31, 32).

5. Microvalve according to Claim 4, characterized in that the electrode connections (37, 38) are routed to the outside of the microvalve by etched channels (25) in the silicon carrier (10).

6. Microvalve according to one of Claims 1 to 3, characterized in that the coverings (31, 32) each have a silicon carrier (311, 321) with at least one insulating layer (312, 322) applied thereto, which insulating layers electrically insulate the silicon carrier (10) from the silicon carriers (311, 321) of the coverings (31, 32).

7. Microvalve according to Claim 6, characterized in that the insulating layers (212, 322) are silicon oxide layers.

8. Microvalve according to Claim 6 or 7, characterized in that the electrodes (45, 46) and electrode connections (47, 48) are diffused into the surfaces, facing the silicon carrier (10), of the silicon carriers (311, 321) of the coverings.

9. Microvalve according to one of the preceding claims, characterized in that the valve plate (20) is connected to the silicon carrier (10) on one side, two sides, three sides or four sides.

10. Microvalve according to one of the preceding claims, characterized in that the valve plate (20) has, in the region of the inlet (33) and/or of the outlet (34), a sealing lip (22) as the closing element, which lip can be pressed against the at least one valve seat (331, 341).

11. Microvalve according to one of the preceding claims, characterized in that the valve plate (20) has a sealing lip (22) which can be pressed against the valve seat (341) of the outlet (34), and in that that surface of the valve plate (20) which is opposite to the sealing lip (22) has at least one spacer (21) to ensure a spacing from the covering (31).

12. Microvalve according to one of the preceding claims, characterized in that the valve plate (20) has groove-like depressions (23, 24) in its surfaces facing the coverings (31, 32).

13. Microvalve according to one of the preceding claims, characterized in that it is used as an on-off valve.

14. Microvalve according to one of Claims 1 to 12, characterized in that it is used as a continuous control valve.

## Revendications

1. Microvalve réalisée dans une structure à plusieurs couches,
- au moins une couche étant formée par un support de silicium structuré,
- le support de silicium structuré (10) étant prévu entre deux recouvrements (31, 32) formés d'une ou plusieurs couches (311, 312, 321, 322) ,
- une entrée (33) étant formée par un passage dans l'un des deux recouvrements (31),
- une sortie (34) étant réalisée par un passage dans l'autre recouvrement (32),
- un organe d'obturation étant relié au support de silicium (10) par au moins une branche (15) susceptible de fléchir,
caractérisée en ce que :
- la microvalve a une construction en sandwich,
- dans le support en silicium (10), au niveau de l'entrée (33) et de la sortie (34), on a formé une structure de plaque de clapet (20), sensiblement symétrique pour les surfaces extérieures tournées vers les deux recouvrements (31, 32),
- la plaque de clapet (20) est réalisée sous forme d'organe d'obturation (22) au niveau de l'entrée (33) et /ou de la sortie (34),
- en regard de la plaque formant clapet (20), sur les recouvrements (31, 32), on a prévu des électrodes (35, 36, 45, 46) ,
- la plaque formant clapet (20) constitue la contre-électrode pour les électrodes (35, 36, 45, 46),
- et par application de tensions électriques aux électrodes (35, 36, 45, 46) ou à la plaque formant clapet (20) , on provoque un mouvement de la plaque formant clapet (20) vers l'entrée (33) ou à la sortie (34).

2. Microvalve selon la revendication 1,
caractérisée en ce que
l'entrée (33) et la sortie (34) sont en regard l'une de l'autre.

3. Microvalve selon la revendication 1 ou 2,
caractérisée en ce que
les couches (312, 322) et les recouvrements (31, 32) tournés vers le support de silicium (10) sont des couches de verre.

4. Microvalve selon l'une des revendications précédentes,
caractérisée en ce que
sur la surface des recouvrements (31, 32) tournés vers le support de silicium (10), se trouvent les électrodes (35, 36) et les branchements d'électrode (37, 38) sous la forme de métallisation structurée.

5. Microvalve selon la revendication 4,
caractérisée en ce que
les branchements des électrodes (37, 38) traversent des canaux obtenus par attaque chimique (25) dans le support de silicium (10), sur la face extérieure de la microvalve.

6. Microvalve selon l'une des revendications 1 à 3,
caractérisée en ce que
les recouvrements (31, 32) comportent chaque fois un support de silicium (311, 321) portant au moins une couche isolante (312, 322) isolant électrique le support de silicium (10) par rapport au support de silicium (311, 321) des recouvrements (31, 32) .

7. Microvalve selon la revendication 6,
caractérisés en ce que
les couches d'isolation (312, 322) sont des couches d'oxyde de silicium.

8. Microvalve selon la revendication 6 ou 7,
caractérisée en ce que
les électrodes (45, 46) et les branchements d'électrode (47, 48) sont diffusés dans la surface extérieure des supports de silicium (311, 321) des recouvrements, du côté tourné vers le support de silicium (10).

9. Microvalve selon l'une des revendications précédentes,
caractérisée en ce que
la plaque formant clapet (20) est reliée d'un côté, de deux côtés, de trois côtés ou de quatre côtés au support de silicium (10).

10. Microvalve selon l'une des revendications précédentes,
caractérisée en ce qu'au
niveau de l'entrée (33) et/ou de la sortie (34), la plaque formant clapet (20) comporte une lèvre d'étanchéité (22) formant l'organe d'obturation susceptible d'être pressé contre au moins un siège de clapet (331, 341).

11. Microvalve selon l'une des revendications précédentes,
caractérisée en ce que
la plaque formant clapet (20) présente une lèvre d'étanchéité (22) susceptible d'être pressée contre le siège de clapet (341) de la sortie (34) et en ce que la surface de la plaque formant clapet (20) en regard de la lèvre d'étanchéité (22) comporte au moins un organe d'écartement (21) par rapport au recouvrement (31).

12. Microvalve selon l'une des revendications précédentes,
caractérisée en ce que
la plaque formant clapet (20) comporte dans ses surfaces tournées vers les recouvrements (31, 32), des cavités (23, 24) en forme de rainures.

13. Microvalve selon l'une des revendications précédentes,
caractérisée on ce qu'elle
est utilisée comme valve de commutation.

14. Microvalve selon l'une des revendications 1 à 12,
caractérisée en ce qu'elle
est utilisée comme valve de commande continue.
